# EUROPÄISCHE PATENTSCHRIFT

(11) **EP 2 572 396 B1**
(45) Veröffentlichungstag und Bekanntmachung des Hinweises auf die Patenterteilung: **07.12.2016**
(21) Anmeldenummer: 11708862.5
(22) Anmeldetag: 17.03.2011
(51) Int. Cl.: H01M 2/20, H01M 2/22, H01M 2/30, H01M 10/0525, H01M 10/613, H01M 10/647, H01M 10/6553

(54) **LITHIUM-IONEN-BATTERIEZELLE SOWIE VERFAHREN ZUR HERSTELLUNG EINER ELEKTRISCH LEITFÄHIGEN KONTAKTIERUNG VON TERMINALS VON BATTERIEZELLEN**
LITHIUM-ION BATTERY CELL AND METHOD FOR PRODUCING AN ELECTRICALLY CONDUCTIVE CONTACT WITH TERMINALS OF BATTERY CELLS
ÉLÉMENT DE BATTERIE LITHIUM-ION AINSI QUE PROCÉDÉ POUR ÉTABLIR UNE MISE EN CONTACT ÉLECTROCONDUCTRICE DE BORNES D'ÉLÉMENTS DE BATTERIE

(30) Priorität: 17.05.2010 DE 102010029011
(43) Veröffentlichungstag der Anmeldung: 27.03.2013
(73) Patentinhaber: Samsung SDI Co., Ltd., Gyeonggi-do (KR); Robert Bosch GmbH, 70442 Stuttgart (DE)
(72) Erfinder: GLESS, Michael, 70437 Stuttgart-Zazenhausen (DE); ANGERBAUER, Ralf, 71696 Möglingen (DE)
(74) Vertreter: Bee, Joachim
(86) Internationale Anmeldenummer: PCT/EP2011/054018
(87) Internationale Veröffentlichungsnummer: WO 2011/144372

(56) Entgegenhaltungen:
- EP-A1- 1 901 368
- JP-A- 2004 063 133
- JP-A- 2007 323 951
- JP-A- 2010 027 495
- US-A1- 2010 092 858
- Panasonic: "Niobium-Lithium Rechargeable Batteries (NBL series): Individual Specifications", , 31. August 2005 (2005-08-31), XP002634015, Gefunden im Internet: URL:http://www.panasonic.com/industrial/in cludes/pdf/Panasonic_Lithium_NBL621_NBL621 -F9D.pdf [gefunden am 2011-04-20]
- Klaus Seide: "Automatischer externer Fixateur für die optimierte klinische, autarke ambulante oder telemedizinisch gesteuerte Fraktur- und Fehlstellungsbehandlung auf der Basis einer parallelen Roboterkinematik", Schlussbericht , 21. Juni 2007 (2007-06-21), Seiten 2FP,1-55, XP002634016, Technische Universität Hamburg-Harburg Gefunden im Internet: URL:http://epub.sub.uni-hamburg.de/epub/vo lltexte/2009/4084/pdf/555542955.pdf [gefunden am 2011-04-21] -& Sonnenschein Lithium: "Stichwort: Verbesserter Start, Typ: SL-760", , 21. Juni 2007 (2007-06-21), XP002634017, Gefunden im Internet: URL:http://www.mercateo.com/pdf/850_accupo wer/Sonnenschein-SL-760.pdf [gefunden am 2011-04-21]

## Beschreibung

### Stand der Technik

Die vorliegende Erfindung betrifft eine Lithium-Ionen-Batteriezelle, welche ein Gehäuse, innerhalb des Gehäuses angeordnete Elektroden sowie mit den Elektroden elektrisch leitfähig verbundene Terminals zum Anschluss der Batteriezelle aufweist, wobei die Terminals von wenigstens einer Außenfläche der Batteriezelle winklig abstehen und im Wesentlichen die Form eines Stiftes aufweisen und das maximale Querschnittsmaß des Stiftes Qm zur Höhe des Stiftes H in einem Verhältnis von maximal Qm/H = 1/5 steht.

Außerdem betrifft die vorliegende Erfindung ein Verfahren zur Herstellung einer elektrisch leitfähigen Kontaktierung wenigstens eines Terminals einer ersten Batteriezelle mit einem Terminal einer zweiten Batteriezelle, wobei die beiden Batteriezellen erfindungsgemäße Lithium-Ionen Batteriezellen sind.

Herkömmliche Batteriezellen werden üblicherweise durch mit ihren Batteriepolen verschraubte Verbinder miteinander elektrisch leitfähig kontaktierend verbunden. Die Kathode der Batteriezelle bzw. das an der Kathodenseite angeordnete Terminal besteht dabei für gewöhnlich aus Aluminium oder einer Aluminiumlegierung und die Anode bzw. das an der Anodenseite der Batteriezelle angeordnete Terminal besteht üblicherweise aus Kupfer oder einer Kupferlegierung. Dabei sind die Terminals üblicherweise derart geformt, dass sie die größte Fläche zur Befestigung von Verbindern an ihren den Batteriezellengehäusen abgewandten Seiten aufweisen, sodass die Verbindung von Terminal und Verbinder bevorzugt auf der Terminal-Oberseite erfolgt. Bei Ver-schweißung eines Terminals mit einem Verbinder kann dabei aufgrund der räumlichen Nähe der Terminal-Oberfläche zu den Elektroden im Inneren der Batteriezelle die Gefahr der Elektrodenüberhitzung bestehen.

Alternativ zum Verfahren zur Herstellung von stoffschlüssigen Verbindungen werden die Verbinder mit den Terminals verschraubt, so wie es z. B. in der DE 60 2006 000 807 T2 dargestellt ist. Aufgrund der relativ hohen Anzahl von einzelnen, zu verbindenden Bauteilen ist jedoch das Schraubverfahren hinsichtlich des Materialaufwandes und der Fertigungszeit aufwendig. Dadurch, dass Muttern zur Befestigung von Verbindern auf ein senkrecht vom Zellengehäuse abstehenden Gewindeabschnitt geschraubt werden, besteht zudem die Gefahr, dass bei unbeabsichtigt erhöhtem Anzugsmoment der Schraube und/oder, bei ggf. nicht ausreichender Fixierung des Gewindebolzens am Zellengehäuse, das jeweilige Terminal entweder einer unzulässigen Zugbeanspruchung ausgesetzt wird oder derartig verschoben wird, dass es zur Erhöhung von Übergangswiderständen zwischen Terminal und Elektroden kommt oder dass sich der Verbinder zu stark in das Zellengehäuse eindrückt, wodurch es ebenfalls zu Beschädigungen der Elektroden kommen kann. Außerdem kann ein zu geringes oder überhöhtes Anzugsmoment zu Undichtigkeiten an der Stelle der Durchdringung des Batteriepols bzw. des Terminals auf dem Zellengehäuse kommen.

Dabei treten die genannten schädlichen Wirkungen einer Zugkraft im Terminal nicht nur bei Realisierung einer Schraubverbindung auf, sondern ggf. auch bei Durchführung eines alternativen Fügeverfahrens, wie z. B. Toxen oder Clinchen, bei denen die Fügekräfte im Wesentlichen in der Längsachse des Terminals in dieses eingeleitet werden.

Im Schlussbericht eines öffentlich geförderten Projektes, "Automatischer externer Fixateur für die optimierte klinische, autarke ambulante oder telemedizisch gesteuerte Fraktur- und Fehlstellungsbehandlung auf der Basis einer parallelen Roboterkinematik", erstellt vom Berufsgenossenschaftlichen Unfallkrankenhaus Hamburg und Technischer Universität Hamburg-Harburg, wird die Versorgung einer Steuereinheit durch eine Lithium-Batterie des Typs "Sonnenschein SL-760" vorgeschlagen. Aus dem Datenblatt der Firma Sonnenschein zum entsprechenden Batterie-Typ geht hervor, dass die Batteriezellen als sog. AA-Batterien über verschiedene Anschlußarten verfügen können. Alle gezeigten Batteriezellen weisen dabei jeweils zwei Anschlüsse auf, die verteilt sind auf jeweils entgegengesetzt angeordneten Seiten der Batteriezellen.

Der vorliegenden Erfindung liegt somit die Aufgabe zugrunde, eine Lithium-Ionen Batteriezelle sowie ein Verfahren zur Kontaktierung von Batteriezellen zur Verfügung zu stellen, bei denen die Terminals derart ausgestaltet sind, dass sie in einfacher und kostengünstiger Weise derart miteinander verbunden werden, dass in den Batteriezellen ein minimierter Übergangswiderstand gewährleistet ist und die Batteriezellen eine lange Lebensdauer aufweisen.

Diese Aufgabe wird durch die Lithium-Ionen-Batteriezelle nach Anspruch 1 sowie durch das Verfahren zur Herstellung einer elektrisch leitfähigen Kontaktierung nach Anspruch 5 erfindungsgemäß gelöst. Vorteilhafte Ausgestaltungen der erfindungsgemäßen Lithium-lonen-Batterie sind in den Unteransprüchen 2 bis 4 angegeben. Vorteilhafte Ausgestaltungen des erfindungsgemäßen Verfahrens zur Herstellung einer elektrisch leitfähigen Kontaktierung sind in den Unteransprüchen 6 bis 8 angegeben.

### Offenbarung der Erfindung

Erfindungsgemäß wird eine Lithium-Ionen-Batteriezelle zur Verfügung gestellt, welche ein Gehäuse, innerhalb des Gehäuses angeordnete Elektroden sowie mit den Elektroden elektrisch leitfähig verbundene Terminals zum Anschluss der Batteriezelle aufweist, wobei die Terminals von wenigstens einer Außenfläche der Batteriezelle, die die Oberseite des Gehäuses ist, winklig abstehen und im Wesentlichen die Form eines Stiftes aufweisen und das maximale Querschnittsmaß des Stiftes Qm zur Höhe des Stiftes H in einem Verhältnis von maximal Qm/H = 1/5 steht. Erfindungsgemäß weist wenigstens eines der Terminals wenigstens eine glatte Oberfläche an seiner Längsseite auf. Die zu verbindenden Terminals sind dabei direkt oder indirekt mit der jeweiligen positiven oder negativen Elektrode der Batteriezelle verbunden. Das Terminal im Sinne der Erfindung soll der außerhalb des Batteriezellengehäuses angeordnete Bereich eines Batteriepols sein, der im Inneren der Batteriezelle mit der Elektrode entweder durch ein Fortsatz verbunden ist, sodass dieser Fortsatz ein integraler Bestandteil eines länglichen Bauteiles ist, welches das Terminal umfasst, oder das Terminal ist mit der jeweiligen Elektrode durch ein extra Verbindungselement verbunden. Das heißt, dass ein das Terminal umfassendes Bauteil die Außenfläche durchdringt, oder dass das Terminal auf der Außenfläche angeordnet ist und mittels eines extra Verbindungselementes durch die Außenfläche hindurch mit einer Elektrode verbunden ist.

Bevorzugt steht das Terminal dabei in einem Winkel von 90° zur Außenfläche ab. Die Stiftform des Terminals kann dabei zylinderförmig oder rriehrkantförmig ausgestaltet sein, wobei sie erfindungsgemäß an ihrer Längsseite wenigstens eine glatte Oberfläche aufweist. Das heißt, dass sie an ihrer Längsseite wenigstens eine Oberfläche aufweist, die keine Gewinderillen aufweist und mindestens derart glatt ist, wie sie mit herkömmlichen Dreh- oder Fräsverfahren herstellbar ist. Der Vorteil der erfindungsgemäßen Ausgestaltung des Terminals liegt insbesondere darin, dass aufgrund der Anordnung der glatten Seitenfläche Kräfte oder Momente seitlich in das stiftförmige Terminal eingeleitet werden können, und nicht axial wie es den herkömmlichen Verbindungsverfahren entspricht. Das Terminal wird somit lediglich auf Biegung beansprucht, wodurch ein entsprechendes Biegemoment in der Stelle der Einspannung im Batteriezellengehäuse erzeugt wird. Dieses Biegemoment ist durch das Batteriezellengehäuse im Wesentlichen unkritisch aufnehmbar. Durch entsprechende Vorrichtungen oder Hilfsmittel lassen sich in das Terminal an der der Krafteinleitung gegenüberliegenden Seite Gegenkräfte bzw. Gegenmomente einleiten zur Kompensierung der Fügekräfte. Zur Realisierung einer optimal elektrisch leitfähigen Kontaktierung wird die glatte Oberfläche an der Längsseite des Terminals mit dem Verbindungspartner kontaktiert.

Die mit den Terminals verbundenen Elektroden werden somit bei Herstellung der Verbindung der Terminals entlastet, wodurch ein minimaler Übergangswiderstand zwischen Terminal und Elektrode gewährleistet bleibt und Beschädigungen oder Spannungen derart verhindert oder minimiert werden, dass die Batteriezelle eine hohe Lebensdauer aufweist.

In einer Ausführungsform des Terminals ist vorgesehen, dass dieses im Wesentlichen eine Zylinderform aufweist. Die erfindungsgemäße glatte Oberfläche am Terminal ist damit die Zylindermantelfläche. Diese Ausgestaltung wirkt sich aufgrund ihrer Einfachheit kosten-minimierend aus.

In einer Ausführungsform ist vorgesehen, dass das Terminal an seiner Längsseite wenigstens eine ebene Fläche aufweist. Diese ebene Fläche ist bevorzugt die erfindungsgemäße glatte Oberfläche des Terminals, wobei die ebene Fläche eine Fläche eines stiftförmigen Mehrkantprofils sein kann oder auch eine Abflachung an einem zylinderförmigen Stift.

Zur Aufnahme von Fügekräften und- Momenten ist vorteilhafterweise vorgesehen, dass das Terminal fest mit dem Gehäuse verbunden ist. Diese feste Verbindung lässt sich z. B. durch eine Mutter realisieren, die auf einem Gewindeabsatz am Terminal sitzt und gegen eine Dichtung am Gehäuse drückt. Die dadurch realisierte feste Einspannung des Terminals ermöglicht die Einleitung von Kräften und Momenten in das Terminal, weil die Kräfte und Momente vom Terminal in das Gehäuse übertragen werden und nicht durch die Elektrode aufgenommen werden müssen.

Zwecks Kühlung des Terminals bei seiner Verbindung mit einem Verbinder und/oder beim Betrieb der Batteriezellen ist vorgesehen, dass das Terminal und/oder die mit dem Terminal verbundene Elektrode eine Kühleinrichtung aufweist und/oder mit einer Kühleinrichtung verbunden ist. Es kann z. B. die Elektrode und/oder das an ihr befestigte Terminal mit Kühlkanälen versehen sein, durch welche Kühlmittel strömbar ist, sodass ein Wärmetransport von der Elektrode bzw. vom Terminal in das Kühlmittel erfolgt und somit kein Wärmestau und keine Überhitzung der Elektrode bzw. des Terminals erfolgen kann.

Zur Lösung der Aufgabe wird außerdem ein Verfahren zur Herstellung einer elektrisch leitfähigen Kontaktierung wenigstens eines Terminals einer ersten Batteriezelle mit einem Terminal einer zweiten Batteriezelle zur Verfügung gestellt, wobei die beiden Batteriezellen Lithium-Ionen-Batteriezellen sind, welche ein Gehäuse, innerhalb des Gehäuses angeordnete Elektroden sowie mit den Elektroden elektrisch leitfähig verbundene Terminals zum Anschluss der Batteriezellen aufweisen, und die zu kontaktierenden Terminals von wenigstens einer Außenfläche der Batteriezelle, die die Oberseite des Gehäuses ist, winklig abstehen und im Wesentlichen die Form eines Stiftes aufweisen und das maximale Querschnittsmaß des Stiftes Qm zur Höhe des Stiftes H in einem Verhältnis von maximal Qm/H = 1/5 steht, und wobei die zu kontaktierenden Terminals wenigstens eine glatte Oberfläche an ihren Längsseiten aufweisen. Erfindungsgemäß werden die Terminals mit einem Fügeverfahren miteinander elektrisch leitfähig kontaktierend verbunden, bei dem Kräfte zur Realisierung der Verbindung im Wesentlichen senkrecht zur Längsachse der Stiftform des jeweiligen Terminals auf dieses aufgebracht werden. Dabei kann die Verbindung der Terminals miteinander direkt oder indirekt erfolgen, das heißt, dass entsprechend ausgestaltete Terminals unmittelbar miteinander kontaktiert werden oder das alternativ und in bevorzugter Weise die Terminals mittelbar durch einen Verbinder miteinander elektrisch leitfähig kontaktierend miteinander verbunden werden. Unter dem maximalen Querschnittsmaß des Stiftes ist dabei die maximale Erstreckung in seinem Querschnitt zu verstehen, wie z. B. bei einem rechteckigen Querschnitt die Diagonale ist und bei einem runden Querschnitt der Durchmesser. Wie bereits erwähnt sind die erfindungsgemäßen Terminals derart aufgebaut, dass sie in einfacher Weise seitlich belastet werden können, da sie seitlich die größte Oberfläche zum Anschluss des Verbinders oder eines weiteren Terminals zur Verfügung stellen. Durch die Belastung des Terminals senkrecht zu seiner Längsachse werden somit Kräfte und Momente in das Terminal und somit auch in das Batteriezellengehäuse eingeleitet, die nicht in der Längsachse des Terminals liegen, sodass Verformungen oder Verschiebungen der mit den Terminals verbundenen Elektroden entgegen gewirkt wird und Spannungen in
der Batteriezelle vermindert werden. Bei Einleitung der Fügekräfte erfindungsgemäß senkrecht zur Längsachse der Stiftform des jeweiligen Terminals können auf der der Krafteinleitungsstelle gegenüberliegenden Seite des Terminals mittels Werkzeugen oder Vorrichtungen Gegenkräfte erzeugt werden, um die Kräfte beim Fügen insgesamt im Gleichgewicht zu halten und somit die Belastung der gesamten Batteriezelle zu verringern.

In bevorzugter Ausführungsform des Verfahrens ist vorgesehen, dass die Herstellung der Verbindung mittels Schweißung an einer Längsseite des Terminals erfolgt. Das heißt, dass die Terminals mittels Schweißen miteinander verbunden werden. Dabei ist die vorliegende Erfindung nicht unbedingt nur auf typische Schweißverfahren eingeschränkt, sondern es kann vorgesehen sein, dass ein jegliches stoffschlüssig wirkendes Verfahren zur Verbindung bzw. Herstellung der elektrisch leitfähigen Kontaktierung am Terminal dient. Vorteilhaft wirkt sich dabei der geringe Übergangswiderstand im Bereich der Schweißnaht sowie die Möglichkeit der Automatisierung des Montageprozesses und die aufgrund der verringerten Anzahl der Bauteile verringerten Einzelteilkosten aus. Außerdem wird durch die längliche Stiftform der Terminals erreicht, dass die Stelle der Schweißung relativ weit entfernt ist vom Batteriezellengehäuse und somit von den darin aufgenommenen Elektroden, sodass der Wärmeeintrag in die mit den Terminals verbundenen Elektroden verringert wird und eine auf Überhitzung basierende Schädigung der Elektroden nicht zu erwarten ist. Üblicherweise ist eines der Terminals einer Batteriezelle aus Kupfer oder einer geeigneten Kupferlegierung hergestellt und das andere Terminal aus Aluminium oder einer geeigneten Aluminiumlegierung hergestellt. Bei Serienschaltung von Batteriezellen durch Verbindung der Terminals der Batteriezellen untereinander wird der Pluspol einer ersten Batteriezelle mit dem Minuspol einer zweiten Batteriezelle verbunden, sodass eine Verbindung zwischen einem Kupfer-Terminal und einem Aluminium-Terminal realisiert werden muss. Zur erfindungsgemäßen Verbindung dieser Terminals mittels Schweißung können diese Terminals z. B. mittels Laserschweißen, Reibschweißen, Kaltpressschweißen, Widerstandsschweißen, insbesondere Punktschweißen, oder Diffusionsschweißen miteinander verbunden werden, wobei bei einigen dieser Verfahren relativ hohe Normalkräfte auf das Terminal seitlich aufgebracht werden. Diese Normalkräfte lassen sich jedoch wie bereits beschrieben in einfacher Weise durch Einleitung von Gegenkräften aufheben oder können durch die Einspannung des Terminals im Batteriezellengehäuse aufgenommen werden.

Alternativ kann vorgesehen sein, dass die Herstellung der Verbindung mittels eines wenigstens ein Terminal umformenden Vorganges erfolgt. Das heißt, dass ein oder beide Terminals, die miteinander zu verbinden sind, mittels Crimpen, Nieten oder Durchsetzfügen (auch Toxen oder Clinchen genannt) oder durch Biegen wenigstens eines Terminals miteinander verbunden werden, wobei das gebogene Terminalende ggf. geschlitzt ist und formschlüssig mit dem anderen Terminal verhakt wird und aufgrund eigener Elastizität oder ständig wirkender äußerer Kräfte an bzw. auf das andere Terminal gepresst wird. In besonderer Ausgestaltung kann ein Terminal an einer Seitenfläche einen Außen- oder Innenkonus aufweisen, der mit einem komplimentär ausgestalteten Innen- oder Außenkegel eines Verbindungselementes oder eines weiteren Terminals unter Einleitung einer Zugkraft- oder Druckkraft dauerhaft kontaktiert wird und somit einen Kegelpressverband realisiert.

In einer weiteren alternativen Ausgestaltung der Verbindung ist vorgesehen, dass diese mittels wenigstens einer Schraubverbindung realisiert wird, wobei das Anzugsmoment zur Fixierung der Schraubverbindung in einer Ebene verläuft, die parallel zur Längsachse des im Wesentlichen stiftförmigen Terminals ist. Das heißt, dass im Gegensatz zu einer herkömmlichen Schraubverbindung von Terminals, bei der die Mutter auf ein zapfenförmiges Terminal aufgeschraubt wird, hier die Längsachse eines Außengewindes winklig zur Längsachse des Terminals angeordnet ist. Die Einzelkräfte eines ein Anziehmoment substituierenden Kräftepaares wirken somit senkrecht zur Längsachse des Terminals. Der Vorteil dieser Ausgestaltung der Schraubverbindung liegt in der geringeren Gefahr der Übertragung des Anziehmomentes auf die Elektroden und somit in der geringen Gefahr der Beschädigung oder Verlagerung der Elektrode. Außerdem kann die Schraubverbindung mit einem relativ hohen Drehmoment angezogen werden, wodurch ein hoher Anpressdruck zwischen den Verbindungsteilen gewährleistet ist, was wiederum dauerhaft den Übergangswiderstand gering hält, vor einer ungewollten Verbindungslösung schützt und sich somit erhöhend auf die Lebensdauer der Verbindung auswirkt.

In vorteilhafter Ausgestaltung ist vorgesehen, dass die Terminals in einem aktiv gekühlten Zustand miteinander verbunden werden. Die aktive Kühlung lässt sich insbesondere dadurch einfach erreichen, dass bei mit einer Kühleinrichtung verbundener Elektrode oder Terminal oder bei Verbindung einer Kühleinrichtung mit der Elektrode oder mit dem Terminals das Terminal sich direkt oder indirekt aktiv kühlen lässt, sodass es insbesondere bei Verbindungsverfahren, die einen erhöhten Wärmeeintrag in das Terminal bewirken, zu einer Wärmeabfuhr durch das Kühlmittel kommt und somit der Wärmeeintrag in die Elektroden und damit eine Beschädigung der Elektroden vermieden wird.

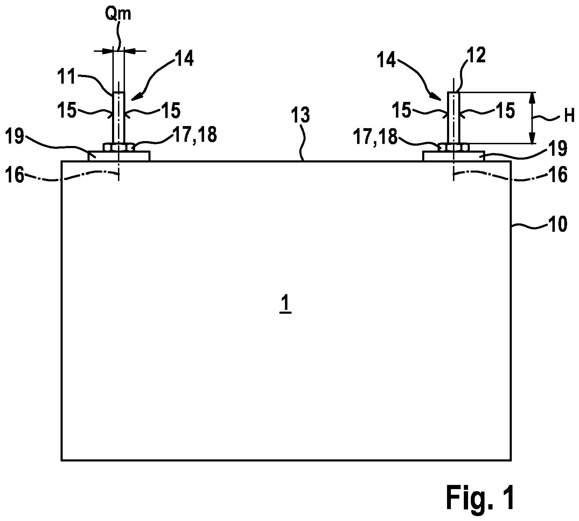

Die vorliegende Erfindung wird im Folgenden anhand der beiliegenden Zeichnungen beschrieben.
Es zeigt dabei Figur 1 eine erfindungsgemäße Lithium-Ionen-Batteriezelle in Ansicht von der Seite,

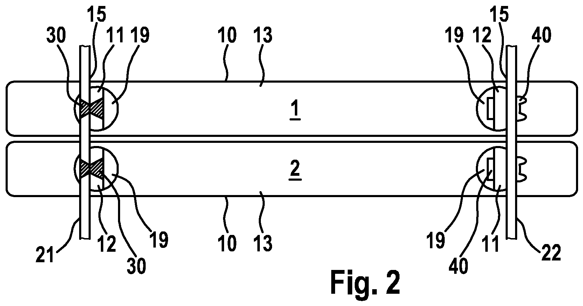

Figur 2 zwei erfindungsgemäß miteinander verbundene Lithium-lonen-Batteriezellen in Ansicht von oben.

Aus Figur 1 ist ersichtlich, dass eine erste Batteriezelle 1 ein Gehäuse 10 aufweist, an dessen einer Außenfläche 13, die die Oberseite des Gehäuses 10 ist, ein erstes Terminal 11 und ein zweites Terminal 12 angeordnet ist. Das erste Terminal 11 ist dabei z. B. am Pluspol der Batteriezelle angeordnet und das zweite Terminal 12 ist am Minuspol der Batteriezelle angeordnet. Ersichtlich ist, dass die beiden Terminals 11, 12 im Wesentlichen eine Stiftform aufweisen. Das heißt, dass sie sich in einer Längsrichtung entlang der Längsachse 16 senkrecht von der Außenfläche 13 erstrecken. Die beiden Terminals 11, 12 weisen dabei an einander gegenüberliegenden Seiten ebene Flächen 15 auf. Unterhalb der ebenen Flächen 15 weisen die Terminals 11, 12 jeweils einen Gewindeabsatz 18 auf, auf dem jeweils eine Mutter 17 verdrehbar angeordnet ist. Die Mutter 17 drückt auf eine auf oder im Gehäuse 10 angeordnete Dichtung 19. Die Terminals 11, 12 weisen ein maximales Querschnittsmaß Qm auf, welches das Maß der maximalen Erstreckung in einer im Wesentlichen planparallel zur Außenfläche 13 verlaufenden Querschnittsfläche ist. Außerdem weisen die Terminals 11, 12 eine Höhe H auf, die dem Abstand zwischen der Oberseite der Mutter 17 und dem oberen Ende des Terminals 11, 12 entspricht. Das maximale Querschnittsmaß des stiftförmigen Terminals Qm ist dabei maximal ein Fünftel der Höhe H des stiftförmigen Terminals. Das heißt, dass im Wesentlichen erfindungsgemäß keine gedrungenen, kompakten Terminals angeordnet sind, sondern längliche, schlanke Terminals.

Es ist aus Figur 1 ersichtlich, dass die ebenen Flächen 15 mehr Platz und Fläche zur Befestigung von Verbindern zur Verfügung stellen, als kompakte und gedrungene Terminals. Durch die Ebenheit der ebenen Flächen 15 wird bei Kontaktierung mit einem Verbinder oder mit einem weiteren Terminal ein geringer Übergangswiderstand gewährleistet.

Aus Figur 2 ist die Verbindung von Terminals einer ersten Batteriezelle 1 mit den Terminals einer zweiten Batteriezelle 2 ersichtlich, wobei das erste Terminal 11 der ersten Batteriezelle 1 mit dem zweiten Terminal 12 der zweiten Batteriezelle 2 mittels eines ersten Verbinders 21 verbunden ist und das zweite Terminal 12 der ersten Batteriezelle 1 mit dem ersten Terminal 11 der zweiten Batteriezelle 2 mittels eines zweiten Verbinders 22 miteinander verbunden ist.

Dabei ist die durch den ersten Verbinder 21 realisierte Verbindung der Terminals 11, 12 mittels Punktschweißnähten 30 hergestellt, wobei ersichtlich ist, dass der erste Verbinder 21 mit seiner Längsseite in einfacher Weise an die ebene Fläche 15 der Terminals 11, 12 angelegt ist, wodurch die Einleitung von Fügekräften senkrecht zur Längsachse der Terminals 11, 12 beim Widerstandspunktschweißen und die dabei notwendige Positionierung des ersten Verbinders 21 in einfacher Weise ermöglicht wird. Die elektrisch leitfähige Kontaktierung wird dabei einerseits durch die Schweißnaht 30 zur Verfügung gestellt und andererseits durch die Anlage des ersten Verbinders 21 flächig an den ebenen Flächen 15.

Bei der Verbindung der Terminals 11, 12 mittels des zweiten Verbinders 22 wurde ein alternatives Fügeverfahren durchgeführt, bei dem die Terminals 11, 12 mit dem zweiten Verbinder 22 durch Nieten 40 miteinander verbunden wurden. Statt Durchführung eines Nietvorganges können die Terminals 11, 12 mit dem zweiten Verbinder auch mittels Durchsetzfügen bzw. Toxen, Crunchen oder Clinchen miteinander verbunden werden. Die vorliegende Erfindung ist dabei nicht auf die in Figur 2 dargestellte Ausführungsform der unterschiedlichen Verbindungsarten am ersten und zweiten Verbinder 21, 22 eingeschränkt, sondern es kann vorgesehen sein, dass beide Verbinder mittels des selben Fügeverfahrens mit den Terminals 11, 12 verbunden werden.

## Patentansprüche

1. Lithium-Ionen-Batteriezelle (1), welche ein Gehäuse (10), innerhalb des Gehäuses (10) angeordnete Elektroden sowie mit den Elektroden elektrisch leitfähig verbundene Terminals (11, 12) zum Anschluss der Batteriezelle (1) aufweist, wobei die Terminals (11, 12) von wenigstens einer Außenfläche (13) der Batteriezelle (1), die eine Oberseite des Gehäuses (10) ist, winklig abstehen und wenigstens eines der Terminals (11, 12) wenigstens eine glatte Oberfläche an seiner Längsseite aufweist,
**dadurch gekennzeichnet,**
**dass** die Terminals (11, 12) die Form eines Stiftes aufweisen und sie sich in einer Längsrichtung entlang einer Längsachse (16) des stiftförmigen Terminals (11, 12) senkrecht von der Außenfläche (13) der Batteriezelle (1) erstrecken, wobei das maximale Querschnittsmaß des Stiftes Qm zur Höhe des Stiftes H in einem Verhältnis von maximal Qm/H =1/5 steht.

2. Lithium-Ionen Batteriezelle (1) nach Anspruch 1,
**dadurch gekennzeichnet,**
**dass** das Terminal (11, 12) eine Zylinderform aufweist.

3. Lithium-Ionen Batteriezelle (1) nach Anspruch 1 oder 2,
**dadurch gekennzeichnet,**
**dass** das Terminal (11, 12) an seiner Längsseite wenigstens eine ebene Fläche aufweist.

4. Lithium-Ionen Batteriezelle (1) nach wenigstens einem der vorhergehenden Ansprüche,
**dadurch gekennzeichnet,**
**dass** das Terminal (11, 12) fest mit dem Gehäuse (10) verbunden ist.

5. Verfahren zur Herstellung einer elektrisch leitfähigen Kontaktierung wenigstens eines Terminals (11, 12) einer ersten Batteriezelle (1) mit einem Terminal einer zweiten Batteriezelle (2), wobei die beiden Batteriezellen (1, 2) Lithium-Ionen-Batteriezellen sind, welche ein Gehäuse (10), innerhalb des Gehäuses (10) angeordnete Elektroden sowie mit den Elektroden elektrisch leitfähig verbundene Terminals (11, 12) zum Anschluss der Batteriezelle (1) aufweisen, und die zu kontaktierenden Terminals (11, 12) von wenigstens einer Außenfläche (13) der Batteriezelle (1), die eine Oberseite des Gehäuses (10) ist, winklig abstehen und die zu kontaktierenden Terminals (11, 12) wenigstens eine glatte Oberfläche an ihren Längsseiten aufweisen, wobei die Terminals (11, 12) mit einem Fügeverfahren miteinander elektrisch leitfähig kontaktierend verbunden werden,
**dadurch gekennzeichnet,**
**dass** die Terminals (11, 12) die Form eines Stiftes aufweisen, und die Terminals (11, 12) sich in einer Längsrichtung entlang einer Längsachse (16) des stiftförmigen Terminals (11, 12) senkrecht von der Außenfläche (13) der Batteriezelle (1) erstrecken, wobei das maximale Querschnittsmaß des Stiftes Qm zur Höhe des Stiftes H in einem Verhältnis von maximal Qm/H =1/5 steht, und wobei beim Fügeverfahren Kräfte zur Realisierung der Verbindung senkrecht zur Längsachse (16) der Stiftform des jeweiligen Terminals (11, 12) auf dieses aufgebracht werden.

6. Verfahren zur Herstellung einer elektrisch leitfähigen Kontaktierung nach Anspruch 5,
**dadurch gekennzeichnet,**
**dass** die Herstellung der Verbindung mittels Schweißung an der Längsseite des Terminals (11, 12) erfolgt.

7. Verfahren zur Herstellung einer elektrisch leitfähigen Kontaktierung nach Anspruch 5,
**dadurch gekennzeichnet,**
**dass** die Herstellung der Verbindung mittels eines wenigstens ein Terminal (11, 12) umformenden Vorganges erfolgt.

8. Verfahren zur Herstellung einer elektrisch leitfähigen Kontaktierung nach Anspruch 5,
**dadurch gekennzeichnet,**
**dass** die Verbindung mittels wenigstens einer Schraubverbindung realisiert wird, wobei das Anzugsmoment zur Fixierung der Schraubverbindung in einer Ebene verläuft, die parallel zur Längsachse (16) des stiftförmigen Terminals (11, 12) verläuft.

## Claims

1. Lithium-ion battery cell (1) which has a housing (10), electrodes which are arranged within the housing (10), and also terminals (11, 12), which are electrically conductively connected to the electrodes, for connection of the battery cell (1), wherein the terminals (11, 12) protrude at an angle from at least one outer face (13) of the battery cell (1), which outer surface is a top side of the housing (10), and at least one of the terminals (11, 12) has at least one smooth surface on its longitudinal side,
**characterized**
**in that** the terminals (11, 12) have the shape of a pin and extend perpendicularly from the outer face (13) of the battery cell (1) in a longitudinal direction along a longitudinal axis (16) of the pin-like terminal (11, 12), wherein the maximum cross-sectional size of the pin Qm relative to the height of the pin H is in a ratio of at most Qm/H = 1/5.

2. Lithium-ion battery cell (1) according to Claim 1,
**characterized**
**in that** the terminal (11, 12) has a cylindrical shape.

3. Lithium-ion battery cell (1) according to Claim 1 or 2,
**characterized**
**in that** the terminal (11, 12) has at least one planar face on its longitudinal side.

4. Lithium-ion battery cell (1) according to at least one of the preceding claims,
**characterized**
**in that** the terminal (11, 12) is fixedly connected to the housing (10).

5. Method for establishing electrically conductive contact with at least one terminal (11, 12) of a first battery cell (1) by way of a terminal of a second battery cell (2), wherein the two battery cells (1, 2) are lithium-ion battery cells which have a housing (10), electrodes which are arranged within the housing (10), and also terminals (11, 12), which are electrically conductively connected to the electrodes, for connection of the battery cell (1), and the terminals (11, 12) with which contact is to be made protrude at an angle from at least one outer face (13) of the battery cell (1), which outer face is a top side of the housing (10), and the terminals (11, 12) with which contact is to be made have at least one smooth surface on their longitudinal sides, wherein the terminals (11, 12) are electrically conductively connected to one another in a contact-making manner by way of a joining process,
**characterized**
**in that** the terminals (11, 12) have the shape of a pin and the terminals (11, 12) extend perpendicularly from the outer face (13) of the battery cell (1) in a longitudinal direction along a longitudinal axis (16) of the pin-like terminal (11, 12), wherein the maximum cross-sectional size of the pin Qm relative to the height of the pin H is in a ratio of at most Qm/H = 1/5, and wherein forces for implementing the connection are applied to the respective terminal (11, 12) perpendicularly to the longitudinal axis (16) of the pin shape of the said terminal during the joining process.

6. Method for establishing electrically conductive contact according to Claim 5,
**characterized**
**in that** the connection is established by means of welding on the longitudinal side of the terminal (11, 12).

7. Method for establishing electrically conductive contact according to Claim 5,
**characterized**
**in that** the connection is established by means of a process which changes the shape of at least one terminal (11, 12).

8. Method for establishing electrically conductive contact according to Claim 5,
**characterized in that** the connection is implemented by means of at least one screw connection, wherein the tightening torque for fixing the screw connection runs in a plane which runs parallel to the longitudinal axis (16) of the pin-like terminal (11, 12).

## Revendications

1. Elément de batterie au lithium-ion (1) qui comporte un boîtier (10), des électrodes disposées à l'intérieur du boîtier (10) ainsi que des bornes (11, 12) reliées de manière électriquement conductrice aux électrodes pour le raccordement de l'élément de batterie (1), dans lequel les bornes (11, 12) s'écartent de manière angulaire d'au moins une surface extérieure (13) de l'élément de batterie (1), laquelle surface est une face supérieure du boîtier (10), et au moins l'une des bornes (11, 12) présente au moins une surface lisse sur son grand côté,
**caractérisé en ce que** les bornes (11, 12) présentent la forme d'un crayon et **en ce qu'**elles s'étendent dans une direction longitudinale le long d'un axe longitudinal (16) de la borne (11, 12) en forme de crayon perpendiculairement à la surface extérieure (13) de l'élément de batterie (1), dans lequel la dimension maximale en coupe transversale du crayon Qm par rapport à la hauteur du crayon H présente un rapport maximal Qm/H=1/5.

2. Elément de batterie au lithium-ion (1) selon la revendication 1,
**caractérisé en ce que** la borne (11, 12) présente une forme cylindrique.

3. Elément de batterie au lithium-ion (1) selon la revendication 1 ou 2,
**caractérisé en ce que** la borne (11, 12) présente sur son grand côté au moins une surface plane.

4. Elément de batterie au lithium-ion (1) selon au moins l'une des revendications précédentes,
**caractérisé en ce que** la borne (11, 12) est fermement reliée au boîtier (10).

5. Procédé pour établir une mise en contact électriquement conductrice d'au moins une borne (11, 12) d'un élément de batterie au lithium-ion (1) avec une borne d'un deuxième élément de batterie (2), dans lequel les deux éléments de batterie (1, 2) sont des éléments de batterie au lithium-ion qui comportent un boîtier (10), des électrodes disposées dans le boîtier (10) ainsi que des bornes (11, 12) reliées de manière électriquement conductrice aux électrodes pour le raccordement de l'élément de batterie (1), et qui s'écartent de manière angulaire d'au moins une surface extérieure (13) de l'élément de batterie (1), pour la mise en contact des bornes (11, 12), laquelle surface est une face supérieure du boîtier (10), et dans lequel les bornes (11, 12) devant être mises en contact présentent au moins une surface lisse sur leur grand côté, dans lequel les bornes (11, 12) sont reliées de manière à établir un contact électriquement conducteur les unes avec les autre par un procédé d'assemblage, **caractérisé en ce que** les bornes (11, 12) présentent la forme d'un crayon et **en ce que** les bornes (11, 12) s'étendent dans une direction longitudinale le long d'un axe longitudinal (16) des bornes en forme de crayon (11, 12) perpendiculairement à la surface extérieure (13) de l'élément de batterie (1), dans lequel la dimension maximale en coupe transversale du crayon Qm par rapport à la hauteur du crayon H présente un rapport maximal Qm/H=1/5, et dans lequel, dans le procédé d'assemblage, des forces sont appliquées sur la borne respective (11, 12) pour créer la liaison perpendiculairement à l'axe longitudinal (16) de la forme de crayon de ladite borne.

6. Procédé pour établir une mise en contact électriquement conductrice selon la revendication 5, **caractérisé en ce que** l'établissement de la liaison est effectuée par soudage sur le grand côté de la borne (11, 12).

7. Procédé pour établir une mise en contact électriquement conductrice selon la revendication 5, **caractérisé en ce que** l'établissement de la liaison est effectuée au moyen d'un processus déformant au moins une borne (11, 12).

8. Procédé pour établir une mise en contact électriquement conductrice selon la revendication 5, **caractérisé en ce que** la liaison est réalisée au moyen d'au moins une liaison par vissage, dans lequel le couple de serrage destiné à fixer la liaison par vissage s'étend dans un plan qui est parallèle à l'axe longitudinal (16) de la borne (11, 12) en forme de crayon.
